# EUROPEAN PATENT APPLICATION

(11) **EP 4 140 621 A1**
(43) Date of publication of application: **01.03.2023**
(21) Application number: 20946403.1
(22) Date of filing: 11.09.2020
(51) Int. Cl.: B22F 3/105, B33Y 30/00

(54) **DOUBLE-POWDER RAPID SWITCHING TYPE SELECTIVE LASER MELTING DEVICE**

(30) Priority: 21.07.2020 CN 202010704662
(71) Applicant: Nanjing Profeta Intelligent Technology Co., Ltd., Nanjing, Jiangsu 211111 (CN)
(72) Inventor: HAO, Dazhen, Nanjing, Jiangsu 211111 (CN); KONG, Longhui, Nanjing, Jiangsu 211111 (CN); HAN, Yinbao, Nanjing, Jiangsu 211111 (CN); ZENG, Gang, Nanjing, Jiangsu 211111 (CN)
(74) Representative: Herrmann, Uwe
(86) International application number: PCT/CN2020/114824
(87) International publication number: WO 2022/016689

(57) **Abstract**

The present disclosure provides a double-powder rapid switching type selective laser melting apparatus, and belongs to the technical field of rapid prototyping. The laser melting apparatus includes a building system, a powder recovery system, and a gas circulation system. A powder cylinder and a building cylinder are fixed to a lower end of a building chamber of the building system. A movable cylinder body is removably mounted at an upper end inside the powder cylinder and the building cylinder. After printing with one metal powder is completed, it is convenient and efficient to switch to another metal powder for printing, greatly improving working efficiency. An air suction port of the gas circulation system is provided with two openings and the air suction port faces a building platform to suck smoke and dust generated during printing with different metal powders. The powder recovery system includes a top powder suction port and a bottom powder suction port for respectively recovering the different metal powders. The different metal powders are separately recovered, to avoid contamination of the metal powder and reduce costs.

## Description

### TECHNICAL FIELD

The present disclosure belongs to the technical field of rapid prototyping, and in particular, to a double-powder rapid switching type selective laser melting apparatus.

### BACKGROUND

A selective laser melting (SLM for short) apparatus scans selected areas on a new powder layer step by step with fine laser focused spots to form a plane profile, and then stacks layers for forming and manufacturing, thus directly obtain a metal functional part of almost any shape and with complete metallurgical bond and a density of nearly 100%. The SLM apparatus simplifies a complex three-dimensional geometry into two-dimensional plane for manufacturing, wherein the manufacturing cost does not depend on the complexity of the part, but on the volume and building orientation of the part.

As an important way to directly manufacture the metal functional part, the SLM apparatus mainly has the following advantages: ① Thanks to use of a layered manufacturing technology, formed parts are not affected by geometric complexity, any complex formed metal part is directly manufactured, and especially for personalized and small-batch complex metal products, manufacturing is very convenient. ② A good beam mode, small laser spots, and high building accuracy are provided via a high power-density fiber laser generator. ③ End metal products are directly obtained through manufacturing. Due to the relatively high laser energy density, a metal material with a high melting point and that is difficult to process is directly processed into end metal products. ④ Formed metal parts are metallurgically formed objects with a relative density of nearly 100% and performance superior to that of conventional castings.

At present, many small and medium-sized processing plants in China are in great demand for selective laser melting apparatuses with small production capacity and adapted for multiple materials, and overseas markets are in more urgent need of such products. Existing selective laser melting apparatuses only satisfy single-material manufacturing; moreover, they have high powder changing cost and require a long time for powder changing.

### SUMMARY

In view of the deficiencies in the prior art, the present disclosure provides a double-powder rapid switching type selective laser melting apparatus, to reduce the printing cost and improve working efficiency.

In the present disclosure, the foregoing technical objectives are achieved by using the following technical means.

A double-powder rapid switching type selective laser melting apparatus includes a building system, an optical system, a powder recovery system, a gas circulation system, and a control system, wherein the building system, the optical system, the powder recovery system, and the gas circulation system are all controlled by the control system;
the building system includes a building chamber, a powder spreading device, a powder cylinder, and a building cylinder, wherein the powder spreading device is disposed at a rear side of the building chamber, and is used to spread metal powder at a bottom end of the building chamber; the building cylinder and the powder cylinder have identical structures, and are both fixed to a lower end of the building chamber; an electric cylinder is fixed to a bottom of the powder cylinder, a removable movable cylinder body is mounted at an upper end inside the powder cylinder, a guide rod of the electric cylinder is connected to a bottom of a piston component, a seal plate is fixed at a top of the piston component, and the seal plate is located inside the movable cylinder body; and a building platform is mounted at a top of a seal plate of the building cylinder;
the optical system provides laser, to melt and form metal powder on a surface of the building platform into a desired shape layer by layer;
the powder recovery system includes a top powder suction port and a bottom powder suction port for respectively recovering two different metal powders, wherein the top powder suction port is in communication with a first air inlet of a variable frequency fan, and the bottom powder suction port is in communication with a second air inlet of the variable frequency fan; and
the gas circulation system includes an air suction port and an air blow port, wherein the air blow port faces an optical protection lens of the optical system, the air suction port is provided with two openings, the air suction port faces the building platform to suck smoke and dust generated during printing with different metal powders; and the air suction port is in communication with a third air inlet of the variable frequency fan, and the air blow port is in communication with an air outlet of the variable frequency fan.

In the foregoing technical solution, the top powder suction port is disposed along a vertical direction of the building chamber, a cyclone dust collector and a filtering tank are sequentially disposed between the top powder suction port and the first air inlet of the variable frequency fan, and a filter element is provided inside the filtering tank.

In the foregoing technical solution, the bottom powder suction port is disposed along a horizontal direction of the building chamber, a cyclone dust collector and a filtering tank are sequentially disposed between the bottom powder suction port and the second air inlet of the variable frequency fan, and a filter element is provided inside the filtering tank.

In the foregoing technical solution, the powder suction port uses a corrugated hose suction head.

In the foregoing technical solution, the top powder suction port and the bottom powder suction port do not work simultaneously.

In the foregoing technical solution, the two openings of the air suction port are both in communication with the third air inlet of the variable frequency fan via a pipe.

In the foregoing technical solution, the two openings of the air suction port do not work simultaneously.

In the foregoing technical solution, a filtering tank is disposed between the air suction port and the third air inlet of the variable frequency fan, and a filter element is provided inside the filtering tank.

The beneficial effects of the present disclosure are as follows. By replacing the removable movable cylinder body, the present disclosure conveniently and quickly switches to another metal powder for printing, after printing with one metal powder is completed; during printing, both filtration of smoke and dust generated and recovery of powder occur completely independently for two metal powders, to avoid contamination of different metal powders; the present disclosure meets requirements of most small and medium-sized enterprises for multi-material rapid switching type selective laser melting apparatuses, and not only reduces costs, but also greatly improves working efficiency.

### BRIEF DESCRIPTION OF THE DRAWINGS

FIG. 1 is a schematic structural diagram of the double-powder rapid switching type selective laser melting apparatus of the present disclosure.
FIG. 2 is a schematic diagram of the variable frequency fan of the present disclosure.
FIG. 3 is a schematic diagram of the filtering tank and the filter element of the present disclosure.
FIG. 4 is a schematic diagram of the cyclone dust collector of the present disclosure.

1. Building chamber; 2. Powder spreading device; 3. Linear guide rail; 4. Synchronous belt; 5. Synchronous pulley; 6. Servo motor A; 7. Rubber scraper bar; 8. Movable cylinder body; 9. Piston component; 10. High-precision electric cylinder; 11. Powder cylinder; 12. Building cylinder; 13. Felt ring component; 14. Piston cylinder component; 15. Laser generator; 16. Laser incident head; 17. Beam expander; 18. Galvanometer; 19. Field lens; 20. Optical protection lens; 21. Powder recovery box; 22. Corrugated hose suction head; 23. Air suction port; 24. Air blow port; 25. Variable frequency fan; 26. Filtering tank; 27. Top powder suction port; 28. Bottom powder suction port; 29. Filter element; 30. Building platform; 31. Oxygen content sensor; 32. Pressure sensor; 33. Temperature sensor; 34. Cyclone dust collector.

### DETAILED DESCRIPTION OF THE EMBODIMENTS

To make the objectives, technical solutions, and advantages of the embodiments of the present disclosure clearer, the technical solutions in the embodiments of the present disclosure will be clearly and completely described hereafter with reference to the accompanying drawings in the embodiments of the present disclosure. It is obvious that the described embodiments are merely some rather than all of the embodiments of the present disclosure. All other embodiments obtained by those of ordinary skill in the art without creative effort based on the embodiments of the present disclosure fall within the protection scope of the present disclosure.

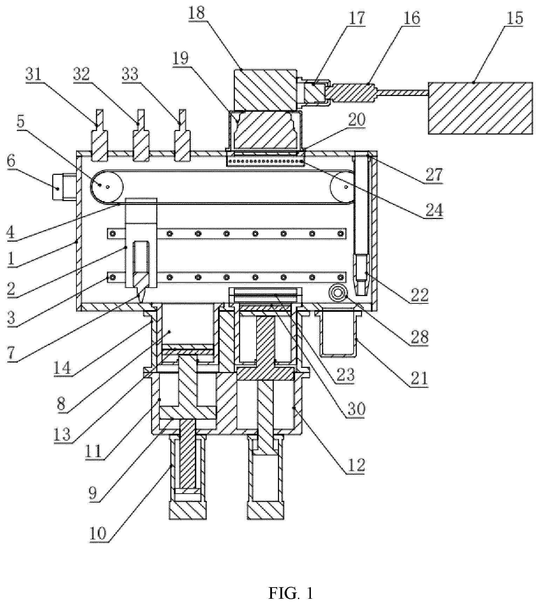

As shown in FIG. 1, a double-powder rapid switching type selective laser melting apparatus provided in the embodiments of the present disclosure includes a building system, an optical system, a powder recovery system, a gas circulation system, and a control system.

The building system includes the building chamber 1, the powder spreading device 2, the powder cylinder 11, and the building cylinder 12. The building chamber 1 is completely sealed. The two parallel linear guide rails 3 are disposed on a side surface inside the building chamber 1. The powder spreading device 2 is slidably connected to the linear guide rails 3. The rubber scraper bar 7 used for leveling the powder is mounted on the powder spreading device 2. A top end of the powder spreading device 2 is fixed to the synchronous belt 4. The synchronous belt 4 and the synchronous pulley 5 mesh, the synchronous pulley 5 is driven by the servo motor 6. The synchronous pulley 5 is fixed inside the building chamber 1. The servo motor 6 is fixed outside the building chamber 1. The linear guide rails 3 are used to precisely guide the powder spreading device 2 and drive the rubber scraper bar 7 to move horizontally with high precision, to ensure uniform powder thickness in a building area (the bottom of the building chamber 1). At the same time, the control system controls a rotation speed of the servo motor 6, and a speed of a powder spreading return stroke is set to be three times a powder spreading speed, to reduce printing time.

The powder cylinder 11 is fixed to a bottom of the building chamber 1, and the powder cylinder 11 is in communication with the building chamber 1. The high-precision electric cylinder 10 is fixed at a bottom of the powder cylinder 11, and the removable movable cylinder body 8 is mounted at an upper end inside the powder cylinder 11. A guide rod of the high-precision electric cylinder 10 extends into a lower end inside the powder cylinder 11 and is connected to a bottom of the piston component 9. Lubricating oil is applied to the lower end of the powder cylinder 11 where the piston component 9 moves, to reduce the running resistance of the piston. A mounting plate and a seal plate are sequentially fixed at a top of the piston component 9. The mounting plate and the seal plate are located inside the movable cylinder body 8. When moving to the top end, the mounting plate fits with a bottom end of the building chamber 1. In addition, a felt ring component 13 is circumferentially fixed on the mounting plate. The felt ring component 13 is used to prevent powder from falling through a gap between the mounting plate and the movable cylinder body 8. When powder needs to be changed, it is only necessary to remove the movable cylinder body 8 as a whole from the building chamber 1 and mount a new movable cylinder body. Metal powder is fed inside the movable cylinder body 8 of the powder cylinder 11.

The high-precision electric cylinder 10 is driven by the servo motor B, to control the position of the piston component 9 in the powder cylinder 11. A double-layer O ring is circumferentially mounted on a tail end of the piston component 9, to effectively improve the air tightness inside the powder cylinder 11.

In order to facilitate mounting and maintenance, the building cylinder 12 and the powder cylinder 11 have the completely same structures and dimensions. In the building cylinder 12, the building platform 30 is mounted at a top of the seal plate, and the building platform 30 has a building diameter of 100 mm and a building height of 70 mm.

In order to improve the powder spreading effect, the powder spreading ratio of the powder cylinder 11 to the building cylinder 12 during printing is 2:1. To be specific, the rotation speed of the servo motor B is controlled by the control system to drive the high-precision electric cylinder 10, so that an ascending stroke of the powder cylinder 11 is twice a descending stroke of the building cylinder 12.

The optical system includes the laser generator 15, the beam expander 17, the galvanometer 18, and the field lens 19. Laser emitted by the laser incident head 16 of the laser generator 15 is subjected to beam expansion by the beam expander 17, reflected by the galvanometer 18, and then focused by the field lens 19 to form a 30 µm beam spot in a focal plane. The focused laser is directed onto the building platform 30 through the optical protection lens 20 disposed at a top end of the building chamber 1, to melt and form level metal powder spread on a surface of the building platform 30 into the desired shape layer by layer. The laser generator 15 is connected to the control system. In this embodiment, the laser generator 15 adopts an optical fiber generator with a wavelength of 1064 µm. Quartz glass is used as the material of the optical protection lens 20.

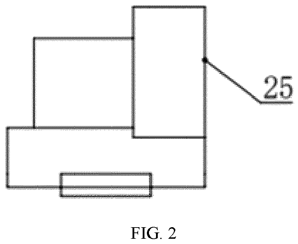

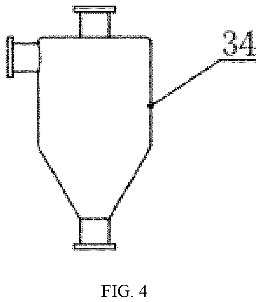

The powder recovery system includes the powder recovery box 21 and powder suction ports. The powder recovery box 21 is mounted at the bottom of the building chamber 1, and is used to collect excess metal powder during powder spreading. The powder suction ports are disposed inside the building chamber 1, and there are two powder suction ports in total, namely, the top powder suction port 27 and the bottom powder suction port 28. The top powder suction port 27 is disposed along a vertical direction of the building chamber 1, while the bottom powder suction port 28 is disposed along a horizontal direction of the building chamber 1. The top powder suction port 27 and the bottom powder suction port 28 are respectively used to recover two different metal powders, to avoid contamination of different metal powders. The top powder suction port 27 is sequentially in communication with the cyclone dust collector 34 (FIG. 4), the filtering tank 26, and a first air inlet of the variable frequency fan 25 (FIG. 2). A filter element is provided inside the filtering tank. The bottom powder suction port 28 is sequentially in communication with the cyclone dust collector 34, the filtering tank 26, and a second air inlet of the variable frequency fan 25. A filter element is provided inside the filtering tank. The cyclone dust collector 34 is used to separate powder in a gas mixture. The filtering tank 26 is used to filter finer impurities. A solenoid valve is further provided on a connecting pipe, and on/off of the solenoid valve is controlled by the control system. The powder suction port uses the corrugated hose suction head 22.

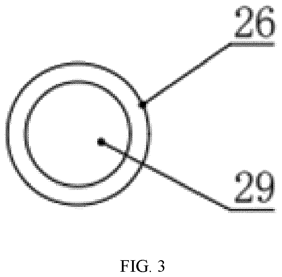

The gas circulation system is used to filter smoke and dust generated during laser melting of metal powder, to prevent the smoke and dust from blocking laser and contaminating the powder. The gas circulation system includes the variable frequency fan 25, the filtering tank 26, the air suction port 23, the air blow port 24, and the filter element 29. The air blow port 24 is disposed at a top of the building chamber 1. The air blow port 24 is in communication with an air outlet of the variable frequency fan 25 via a pipe. A solenoid valve is provided on the connecting pipe. On/off of the solenoid valve is controlled by the control system. During printing, the air blow port 24 blows away smoke and dust on a surface of the optical protection lens 20, to improve printing quality. The air suction port 23 is disposed on one side of the building platform 30. The air suction port 23 is provided with two openings which are used to suck smoke and dust generated on a surface of the building platform 30 during printing with two different metal powders. The two openings are both in communication with a third air inlet of the variable frequency fan 25 via a pipe. A solenoid valve is provided on the connecting pipe, and on/off of the solenoid valve is controlled by the control system. The filtering tank 26 is provided between the air suction port 23 and the third air inlet of the variable frequency fan 25. The filter element 29 is provided inside the filtering tank 26 (FIG. 3). Smoke and dust during printing enter the filtering tank 26 via the air suction port 23 under the action of suction force of the variable frequency fan 25. Gas filtered by the filter element 29 returns into the building chamber 1 via the air blow port 24 for recycling.

The oxygen content sensor 31, the pressure sensor 32, and the temperature sensor 33 are provided at the top of the building chamber 1 to detect, in real time, oxygen content, pressure, and temperature of gas inside the building chamber 1, and transmit the oxygen content, pressure, and temperature of gas inside the building chamber 1 to the control system. When the oxygen content exceeds 1%, the control system outputs a signal to replace gas in the building chamber 1 and reduce oxygen content (the prior art), so as to ensure that parts are not oxidized in the printing process.

A working process of a double-powder rapid switching type selective laser melting apparatus of the present disclosure is described as below. The high-precision electric cylinder 10 at the bottom of the powder cylinder 11 pushes the piston component 9 to move upward, so that the seal plate at the top of the piston component 9 pushes metal powder in the movable cylinder body 8 to the bottom of the building chamber 1. The servo motor 6 drives the synchronous pulley 5, so that the synchronous belt 4 moves and drives the rubber scraper bar 7 on the powder spreading device 2 to spread the metal powder at the bottom of the building chamber 1 onto the surface of the building platform 30 located at the top end of the building cylinder 12 (the building platform 30 is flush with the bottom of the building chamber 1 under driving by the high-precision electric cylinder 10). The laser incident head 16 of the laser generator 15 emits laser which sequentially goes through the beam expander 17, the galvanometer 18, the field lens 19, and the optical protection lens 20, and is finally directed onto the level metal powder spread on the surface of the building platform 30 for melting and forming, to complete processing and forming of one layer of metal powder. The foregoing process is repeated to carry out processing and forming of a second layer of metal powder, until manufacturing of a part is completed. Excess metal powder in the processing and forming process is brought by the rubber scraper bar 7 into the powder recovery box 21. The smoke and dust generated in the processing and forming process of the metal powder enter the filtering tank 26 via one opening of the air suction port 23 under the action of suction force of the variable frequency fan 25. Gas filtered by the filter element 29 returns into the building chamber 1 via the air blow port 24 and blows away smoke and dust on the surface of the optical protection lens 20. After manufacturing of the part is completed, the control system controls one of the powder suction ports to open and suck all powder at corners of the building chamber under the action of the variable frequency fan 25. After processing of the first metal powder is completed, by replacing the movable cylinder body 8 in the building cylinder 12 and the movable cylinder body 8 in the powder cylinder 11, another metal powder is obtained. A part is manufactured according to the same process. The smoke and dust generated in the processing and forming process enter the filtering tank 26 via the other opening of the air suction port 23 under the action of suction force of the variable frequency fan 25. Gas filtered by the filter element 29 returns into the building chamber 1 via the air blow port 24 and blows away the smoke and dust on the surface of the optical protection lens 20. Powder at the corners of the building chamber is sucked by the other powder suction port.

The double-powder rapid switching type selective laser melting apparatus provided in the present disclosure is properly designed so that it is convenient and efficient to change the powder, saving time and labor, reducing costs, and greatly improving working efficiency. The present disclosure meets requirements of most small and medium-sized enterprises for multi-material rapid switching type selective laser melting apparatuses.

Finally, it should be noted that the foregoing embodiments are only intended to describe the technical solutions of the present disclosure, but not to limit the technical solutions of the present disclosure. Although the present disclosure has been described in detail with reference to the foregoing embodiments, those of ordinary skill in the art should understand that they can still modify the technical solutions described in the foregoing embodiments, or make equivalent substitutions to some of the technical features therein. However, such modifications or substitutions do not make the essence of the corresponding technical solutions deviate from the spirit and scope of the technical solutions of the embodiments of the present disclosure.

## Claims

1. A double-powder rapid switching type selective laser melting apparatus, **characterized by** comprising a building system, an optical system, a powder recovery system, a gas circulation system, and a control system, wherein the building system, the optical system, the powder recovery system, and the gas circulation system are all controlled by the control system;
the building system comprises a building chamber (1), a powder spreading device (2), a powder cylinder (11), and a building cylinder (12), wherein the powder spreading device (2) is disposed at a rear side of the building chamber (1), and is used to spread metal powder at a bottom end of the building chamber (1); the building cylinder (12) and the powder cylinder (11) have identical structures, and are both fixed to a lower end of the building chamber (1); an electric cylinder (10) is fixed to a bottom of the powder cylinder (11), a removable movable cylinder body (8) is mounted at an upper end inside the powder cylinder (11), a guide rod of the electric cylinder (10) is connected to a bottom of a piston component (9), a seal plate is fixed at a top of the piston component (9), and the seal plate is located inside the movable cylinder body (8); and a building platform (30) is mounted at a top of a seal plate of the building cylinder (12);
the optical system provides laser, to melt and form metal powder on a surface of the building platform (30) into a desired shape layer by layer;
the powder recovery system comprises a top powder suction port (27) and a bottom powder suction port (28) for respectively recovering two different metal powders, wherein the top powder suction port (27) is in communication with a first air inlet of a variable frequency fan (25), and the bottom powder suction port (28) is in communication with a second air inlet of the variable frequency fan (25); and
the gas circulation system comprises an air suction port (23) and an air blow port (24), wherein the air blow port (24) directly faces an optical protection lens (20) of the optical system, the air suction port (23) is provided with two openings, the air suction port (23) directly faces the building platform (30) to suck smoke and dust generated during printing with different metal powders; and the air suction port (23) is in communication with a third air inlet of the variable frequency fan (25), and the air blow port (24) is in communication with an air outlet of the variable frequency fan (25).

2. The double-powder rapid switching type selective laser melting apparatus according to claim 1, **characterized in that** the top powder suction port (27) is disposed along a vertical direction of the building chamber (1), a cyclone dust collector (34) and a filtering tank (26) are sequentially disposed between the top powder suction port (27) and the first air inlet of the variable frequency fan (25), and a filter element (29) is provided inside the filtering tank (26).

3. The double-powder rapid switching type selective laser melting apparatus according to claim 1, **characterized in that** the bottom powder suction port (28) is disposed along a horizontal direction of the building chamber (1), a cyclone dust collector (34) and a filtering tank (26) are sequentially disposed between the bottom powder suction port (28) and the second air inlet of the variable frequency fan (25), and a filter element (29) is provided inside the filtering tank (26).

4. The double-powder rapid switching type selective laser melting apparatus according to claim 2 or 3, **characterized in that** the powder suction port uses a corrugated hose suction head (22).

5. The double-powder rapid switching type selective laser melting apparatus according to claim 4, **characterized in that** the top powder suction port (27) and the bottom powder suction port (28) do not work simultaneously.

6. The double-powder rapid switching type selective laser melting apparatus according to claim 1, **characterized in that** the two openings of the air suction port (23) are both in communication with the third air inlet of the variable frequency fan (25) via a pipe.

7. The double-powder rapid switching type selective laser melting apparatus according to claim 6, **characterized in that** the two openings of the air suction port (23) do not work simultaneously.

8. The double-powder rapid switching type selective laser melting apparatus according to claim 6, **characterized in that** a filtering tank (26) is disposed between the air suction port (23) and the third air inlet of the variable frequency fan (25), and a filter element (29) is provided inside the filtering tank (26).
